(19) **Europäisches Patentamt**
**European Patent Office**
**Office européen des brevets**

(11) **EP 4 139 883 B1**

(12) **EUROPEAN PATENT SPECIFICATION**

(45) Date of publication and mention
of the grant of the patent:
**04.12.2024 Bulletin 2024/49**

(21) Application number: **21718616.2**

(22) Date of filing: **20.04.2021**

(51) International Patent Classification (IPC):
*G06T 5/00* (2024.01)    *G06T 5/70* (2024.01)
*G06T 5/40* (2006.01)    *G06T 7/00* (2017.01)

(52) Cooperative Patent Classification (CPC):
**G06T 5/70; G06T 5/40; G06T 7/0012;**
G06T 2207/10081; G06T 2207/30061

(86) International application number:
**PCT/EP2021/060188**

(87) International publication number:
**WO 2021/214032 (28.10.2021 Gazette 2021/43)**

(54) **APPARATUS FOR DETERMINING DECOMPOSED SPECTRAL IMAGE DATA**

VORRICHTUNG ZUR BESTIMMUNG ZERLEGTER SPEKTRALER BILDDATEN

APPAREIL PERMETTANT DE DÉTERMINER DES DONNÉES D'IMAGE SPECTRALE
DÉCOMPOSÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.04.2020 EP 20171337**

(43) Date of publication of application:
**01.03.2023 Bulletin 2023/09**

(73) Proprietor: **Koninklijke Philips N.V.
5656 AG Eindhoven (NL)**

(72) Inventors:
• **FREIMAN, Mordechay, Pinchas
5656 AE Eindhoven (NL)**
• **GOSHEN, Liran
5656 AE Eindhoven (NL)**

(74) Representative: **Philips Intellectual Property &
Standards
High Tech Campus 52
5656 AG Eindhoven (NL)**

(56) References cited:
**WO-A1-2018/114964    WO-A2-2013/011418
US-A1- 2011 064 292**

**Description**

FIELD OF THE INVENTION

The invention relates to an apparatus, method and computer program for determining decomposed spectral image data of a subject.

BACKGROUND OF THE INVENTION

Spectral x-ray imaging is an imaging technique that can be used, for instance, in application for which a good characterization of human anatomy and function is important. In spectral imaging, image data of a subject are acquired with at least two different radiation spectra, for instance, with an x-ray radiation comprising a first wavelength and an x-ray radiation comprising a second wavelength. Thus, spectral image data comprise a plurality of attenuation values acquired at the at least two different radiation spectra. This plurality of attenuation values can be used to calculate a basis decomposition of the spectral image data. A basis decomposition determines from the plurality of attenuation values at the at least two different radiation spectra for each part of a subject, for instance, for each voxel, the contributions of at least two basis functions to the overall mass attenuation coefficient of the material found in this part of the subject. Examples for the basis functions are functions that describe the dependence of the Compton scattering effect and/or the photoelectric effect on the energy of the radiation. The contributions of each of the basis functions to the mass attenuation coefficient of the material in a part of the subject can be regarded as weights weighting the basis functions in mathematical representation of the mass attenuation coefficient. The weights can then be regarded as decomposed spectral image data and can be combined in a plurality of different ways for generating different spectral images, like Compton scattering images, photoelectric images, mono energy images, virtual non-contrast images, etc. In particular, images can be derived from the decomposed spectral image data with a very high contrast between a contrast agent present in the subject during the spectral image data acquisition and the surrounding tissue. However, during the decomposition process of the spectral image data, suboptimal processes, image acquisition inaccuracies and also numerical inaccuracies can result in an inaccurate decomposition of the spectral image data. Such an inaccurate decomposition is in particular noticeable with respect to contrast agents and leads to inaccurate calculations of the distribution of the contrast agent in a region of interest of the subject. Since for clinical applications it is important that the distribution of the contrast agent can be accurately determined by a user like a physician, these inaccuracies can hamper the clinical utilization of spectral image data.

WO 2018/114964 A1 discloses a system for detection and/or correction of residual iodine artifacts in spectral computed tomography (CT) imaging.

US 2011/064292 A1 discloses a method for enhancing a virtual non-contrast image, including receiving a pair of dual scan CT images and calculating a virtual non-contrast image from the pair of CT images using known tissue attenuation coefficients.

SUMMARY OF THE INVENTION

It is an object of the present invention to provide an apparatus, a method and a computer program which allow to determine decomposed spectral image data with an improved accuracy. The invention is defined by the appended claims.

In a first aspect of the present invention, an apparatus is disclosed in claim 1.

Since the contrast agent residual identification unit is adapted to identify a residual region comprising a contrast agent residual in the virtual non-contrast image based on an expected structural characteristics of the contrast agent residual, pre-knowledge of an expected distribution of the contrast agent in the region of interest of the subject can be taken into account. This allows a very accurate determination of regions comprising a contrast agent residual indicating an inaccurate decomposition of the spectral image data in this region. In other words, the identified by the contrast agent residual identification unit presence of said contrast agent residual is indicative of the inaccurate decomposition of the spectral image data in said region. Since the spectral image data decomposition unit is then configured to calculate a new basis decomposition in the residual region by recalculating the weights provided to the basis function in the residual region such that the contrast agent residual is reduced, the correction of the decomposition of the spectral image data is based on the very accurately determined residual regions such that the correction can be focused on these regions and the accuracy of the correction of the decomposition of the spectral image data can be improved. Thus, decomposed spectral image data with an improved accuracy can be provided.

The subject for which spectral image data is acquired can be any subject that can be imaged with a spectral x-ray imaging apparatus. Preferably, the subject refers to a patient in a medical application, wherein the patient can be a human or animal. Before acquiring the spectral image data by using a spectral x-ray imaging apparatus, the subject is injected with a contrast agent. The contrast agent can be any contrast agent that is usable for the intended medical application of the spectral image data. In a preferred embodiment, the contrast agent refers to a iodine based contrast agent. However, the contrast agent can also refer to a barium based contrast agent.

The spectral image data providing unit that can also be regarded as a spectral image data provider is configured to provide spectral image data of the subject, in particular, to provide spectral image data to the spectral image data decomposition unit. The spectral image data providing unit can be a storing unit in which the spectral image data of the subject are stored and from which the spectral image data can be retrieved for providing the same. The spectral image data providing unit can also be a receiving unit for receiving the spectral image data of the subject and for providing the received spectral image data. The spectral image data can be received, for instance, directly from a spectral x-ray imaging apparatus or from a storage of a spectral x-ray imaging apparatus. Moreover, the spectral image data providing unit can also be regarded as comprising a spectral x-ray imaging apparatus or as being a part of a spectral x-ray imaging apparatus.

The spectral x-ray imaging apparatus can be, for instance, based on a dual source technology, a fast kV switching technology, a photon-counting detector technology, etc. The spectral image data acquired with the spectral x-ray imaging apparatus provide image data of the subject acquired with at least two different radiation spectra and are thus indicative of the attenuation of the imaged parts of the subject with respect to the at least two different radiation spectra.

The spectral image data decomposition unit, which can also be regarded as a spectral image data decomposer, is configured to calculate a basis decomposition for the spectral image data in order to provide as result of the basis decomposition decomposed spectral image data. During the basis decomposition of the spectral image data, the contribution of at least two different predetermined basis functions to an overall mass attenuation coefficient of a part of the subject, preferably, a voxel, are determined in the form of weights that weight the basis functions in the mathematical representation of the overall mass attenuation coefficient. The weights depend on the material found in each part of the region of interest of the subject and thus especially vary between the different parts of the subject dependent on the present material composition in this region. Preferably, for each voxel of the region of interest, a weight for each basis function is determined by the spectral image data decomposition unit. The determined weights form the decomposed spectral image data. Based on the decomposed spectral image data, a plurality of different images can be derived by utilizing different combinations of the decomposed spectral image data. An overview of the decomposition of spectral image data and the generation of different spectral images based on the decomposed spectral image data can be found in more detail, for instance, in the article "Detector-based spectral CT with a novel dual-layer technology: principles and applications" by N. Rassouli et al., Insights into Imaging, Volume 8, pages 589-598 (2017).

In a preferred embodiment, the basis functions used for the decomposition of the spectral image data are at least indicative of a function defining the energy dependence of the attenuation on the Compton scattering effect and a function defining the energy dependence of the attenuation on the photoelectric effect. However, also other basis functions can be alternatively or additionally used for the spectral image decomposition. For instance, alternatively or additionally to the Compton scattering effect function and the photoelectric effect function also a iodine basis function indicative of the energy dependence of the attenuation on the iodine content of a material and/or a water basis function indicative of the energy dependence of the attenuation on the water content of a material can be used as basis function.

The virtual non-contrast image generation unit, which can also be regarded as a virtual non-contrast image generator, is configured to generate a virtual non-contrast image based on the decomposed spectral image data. In particular, the virtual non-contrast image generation unit is adapted to generate the virtual non-contrast image based on a predefined combination of the decomposed spectral image data. The virtual non-contrast image refers to an image, wherein the contrast agent (such as iodine) contribution to the basis functions (such as the photoelectric and Compton scattering components) forming part of the decomposed spectral image are removed and generally should not comprise any contribution of the contrast agent to the attenuation of a part of the subject represented by the image values of the virtual non-contrast image. Thus, it can be regarded that a virtual non-contrast image refers substantially to an x-ray image, which would have been acquired without using a contrast agent. A detailed description of the method for determining virtual non-contrast images from the decomposed spectral image data can be found, for instance, in the article "An iodine-calcium separation analysis and virtually non-contrasted image generation obtained with single source dual energy MDCT", Goshen et al., IEEE Nuclear Science Symposium Conference Record, pages 3868-3870 (2008). The generated virtual non-contrast image can be a 2D, 3D or 4D image based on the spectral image data acquired by the spectral imaging apparatus. Generally, in the following in the context of images the term voxel is used to represent an image element of the image comprising one image value. Thus, for instance, also in the context of a 2D image the term voxel is used when referring to a pixel. Accordingly, the term voxel does not limit the corresponding image to a 3D image representation.

The contrast agent residual identification unit, which can be regarded as a contrast agent residual identifier, is configured to identify a residual region comprising a contrast agent residual in the virtual non-contrast image, wherefrom a general contrast agent contribution is removed, based on an expected structural characteristic of the contrast agent residual. Since according to the general principle of the virtual non-contrast image, this image should not comprise any contribution of the contrast agent to the attenuation represented by the image values of the virtual non-contrast image, any region, i.e. voxel, comprising such a contribution, i.e. a contrast agent residual, indicates possible inaccuracies in the spectral image data decomposition. Utilizing pre-knowledge of at least one expected structural characteristic of a contrast agent residual allows for a very effective and accurate search for regions containing a contrast agent residual. An expected structural characteristic of a contrast agent residual that can be used for determining the residual region can refer to any kind of structural characteristics, for instance, to an expected shape of the contrast agent residual, to an expected surrounding of the contrast agent residual, to an expected position of the contrast agent residual, to an expected intensity distribution of the contrast agent residual, etc., in the virtual non-contrast image. The expected structural characteristic can be determined, for instance, based on knowledge of an expected distribution of the contrast agent in the region of interest of the subject that is imaged by the spectral x-ray imaging apparatus. Moreover, the expected structural characteristic can additionally or alternatively be determined with respect to previous cases, i.e. previous spectral image data that refer to a similar situation, for instance, a similar subject, a similar region of interest, a similar medical indication, a similar contrast agent, etc., with respect to the current case. The expected structural characteristic can be predefined, for instance, based on the used contrast agent, or can be selected by a user like a physician, for instance, by providing the user with a plurality of possible structural characteristics, wherein the user can then select the structural characteristic that he/she expects for the current case. The contrast agent residual identification unit can use any kind of filter, segmentation algorithm, or a shape determination algorithm for finding the structural characteristic in the virtual non-contrast image and thus also for finding the residual region.

In a preferred embodiment, the expected structural characteristic refers to a tubular shape and the contrast agent residual identification unit is adapted to identify the residual region by applying a vesselness filter to the virtual non-contrast image. A tubular shape of a contrast agent residual is in particular expected for iodine based contrast agents that are used for emphasizing the vascular structure in a region of interest. However, also other contrast agents used for emphasizing the vascular structure in the region of interest can lead to an expected tubular shape of the contrast agent residual. Applying a vesselness filter to the virtual non-contrast image allows to very effectively identify structures comprising a tubular shape in the virtual non-contrast image. Since the virtual non-contrast image should generally not show the vasculature in detail (because the general contrast agent contribution is removed from the combination of the decomposed spectral image data), tubular shapes identified by the vesselness filters can thus be regarded as referring to contrast agent residuals. In other situations, however, also other structural characteristics can be used. For instance, in a case in which the contrast agent is particularly found within a cancer nodule, the expected structural characteristic might refer to an expected shape of such a cancer nodule, for instance, to a substantially circular or elliptical shape or to a part of a circular or elliptical shape. The contrast agent residual identification unit can then be configured to use a corresponding filter or segmentation algorithm to find structures corresponding to this shape.

According to the invention the residual region comprises the contrast agent and also comprises at least a part of the area surrounding the potential contrast agent residual, being a margin of one or two voxels surrounding the potential contrast agent residual.

In an embodiment, the contrast agent residual identification unit is configured to apply a machine learning based classification algorithm to the virtual non-contrast image for detecting the residual region. Preferably, the machine learning based classification algorithm refers to a deep neural network architecture. Machine learning based classification algorithms, in particular, deep neural network architectures, are in particular suitable for finding predefined structural characteristics in images if trained correctly during a training phase. For the training phase, a plurality of training spectral images, in particular training virtual non-contrast images, in which contrast agent residuals are already identified, can be provided to the machine learning based classification algorithm. In the training spectral images, the contrast agent residuals can be identified, for instance, by an experienced user, like an experienced radiologist, or can be identified by any other known structure identification algorithm, for instance, a vesselness filter. The residual regions containing the identified contrast agent residuals can then be provided together with the training virtual non-contrast images to the machine learning based classification algorithm. During the training phase, the machine learning based classification algorithm then learns to identify the contrast agent residuals in the virtual non-contrast images. After the training, the machine learning based classification algorithm can be applied to a new virtual non-contrast image, i.e. a virtual non-contrast image not being part of the training virtual non-contrast images. The machine learning based classification algorithm then provides as a result the residual region or residual regions. In this embodiment, it can be regarded that the structural characteristic used for identifying the residual region is incorporated into the machine learning based classification algorithm by the selection of the training data.

The spectral image data decomposition unit is configured to calculate a new basis decomposition in the residual region by recalculating the weights provided to the basis function of the spectral image data in the residual region such that the contrast agent residual is reduced. The identified presence of the contrast agent residual is indicative of an inaccurate determination of the weights for the basis functions forming the decomposed spectral image in the residual region. Thus, the spectral image data decomposition unit can be adapted, in order to reduce the contrast agent residual, preferably, to remove the contrast agent residual, to correct the weights of the basis function in the residual region. The spectral image data decomposition unit is adapted to recalculate the basis decomposition based on a correction value. In particular, the spectral image data decomposition unit is adapted to correct the weights, for instance, by adding or subtracting the correction value from the weights of at least one of the basis functions, and then to recalculate the weights of the remaining basis functions according to the decomposition principles, i.e. such that the weighted basis functions result in the mass attenuation coefficient of the part of the residual region. The correction value can be an arbitrary value or a predetermined value. In particular, the correction value can be predetermined based on knowledge of the expected contrast agent residual and/or based on knowledge of the utilized decomposition algorithm. For instance, if a decomposition algorithm and a contrast agent are used for which is known that the combination can lead to an overestimation of the weights of one basis function in some regions leading to contrast agent residuals in these regions, the correction value can be chosen in accordance with this knowledge and can be subtracted from the weight of the respective basis function for recalculating the basis decomposition.

According to the invention, the spectral image data decomposition unit is configured to determine a residual measure for the residual region indicative of the intensity of the contrast agent residual of the residual region and to recalculate the decomposed spectral image data based on the residual measure. Preferably, a residual measure is determined for each part, for instance, each voxel, of the residual region and the correction value for each part is determined based on the residual measure of the part. The spectral image data decomposition unit is then configured to determine the correction value based on the residual measure, for instance, based on a mathematical function indicating a dependence of the correction value on the residual measure. The correction value is then, for instance, be added or subtracted from at least one of the weights of the basis functions in order to recalculate the basis decomposition. In some embodiments the correction value can be determined as being equal to the residual measure such that the residual measure is directly used for correcting the weights of the basis functions.

Preferably, the apparatus is configured to recalculate the basis decomposition, in particular, to correct the weights of the basis functions, of the residual region in an iterative manner. In particular, after the spectral image data decomposition unit has calculated the new basis decomposition, the spectral image data decomposition unit is adapted to provide the new decomposed spectral image data again to the virtual non-contrast image generation unit. The virtual non-contrast image generation unit is then configured to generate a new virtual non-contrast image based on the new decomposed spectral image data. The contrast agent residual identification unit is then configured to identify whether the residual region is still present, wherein the spectral image data decomposition unit then again recalculates the basis decomposition for the still present residual region. For instance, the spectral image data decomposition unit can be adapted to again add or subtract a correction value to or from a weight of at least one basis function. The correction value can be the same as in the previous iteration step or can be determined for each iteration step, for instance, based on the residual measure. In particular, in this embodiment the correction value can be an arbitrary small value, such that the weights are corrected successively with each iterative step. Moreover, the calculation of the new basis decomposition and thus the amending of the weights of the basis functions can be based on a comparison between the image values of the residual region with the image values of the residual region during a previous iteration step. For instance, a correction value can be determined based on this difference.

The iteration can be stopped if a predetermined stopping criterion is fulfilled, preferably, if the contrast agent residual identification unit is not able to identify the residual region any more, indicating that the contrast agent residual is completely removed from the corrected decomposed spectral image data. However, also other technical sensible stopping criteria, for instance, based on a determined correction value, can be utilized. For example, the iteration can also be stopped if the residual measure falls below a predetermined threshold. Moreover, the iteration can also be utilized in a semiautomatic manner, in which an image, for instance, a virtual non-contrast image, resulting from the decomposed spectral image data is presented to a user in each step, wherein the user can then decide whether the iteration can be stopped or not.

Alternatively, to the iteration approach, the apparatus can also be configured to utilize a direct approach for correcting the weights of the basis decomposition in the residual region for determining a new basis decomposition. In this case the spectral image data decomposition unit is configured to directly recalculate the basis decomposition without further providing the resulting new decomposed spectral image data again to the virtual non-contrast image generation unit. In the following, preferred embodiments are described for calculating the new decomposed spectral image data, i.e. for calculating the new basis decomposition, that can be used as part of an iterative approach, but can also be used as part of a direct approach.

According to the description, the spectral image data decomposition unit is configured for calculating the new basis decomposition to define a residual area containing the residual region in the virtual non-contrast image, wherein the new decomposed spectral image data are further calculated based on the defined residual area. The defined residual area can refer to an area with a predetermined shape that is defined around the residual region and completely contains the residual region. For instance, the residual area can refer to an area with a circular, elliptical or rectangular shape surrounding the residual region. The residual area is larger than the residual region. In this way, the residual area contains the (immediate) surroundings of the residual region, thereby providing additional context on the residual region. Taking into account the residual area and thus also information on the surrounding of the residual region, the spectral image data decomposition unit can use this additional information for calculating the new basis decomposition, in particular, for correcting the decomposed spectral image data. The spectral image data decomposition unit is adapted to determine a residual measure based on the residual area. For example, an average image value of the residual area can be used as desired image value of the virtual non-contrast image in the complete residual area and the residual measure can be determined based on the desired image values compared to the image values in the residual region. A correction value can then be determined based in the residual measure and the weights in the residual area can then be corrected accordingly. In an example, the residual measure for a part of the residual region can be determined to be indicative of a difference between such a desired image value and the actual image value of the part of the residual region. In this case it is preferred that the correction value is determined as being equal to the residual measure. However, also other mathematical methods can be used to recalculate the weights such that they refer substantially to the desired image value.

In an embodiment, the spectral image data decomposition unit is configured for calculating the new basis decomposition to determine for the residual area a histogram defined by image values of each region within the residual area and to calculate the new decomposed spectral image data based on the histogram. Preferably, the regions within the residual area refer to the voxels within the residual area such that the histogram is defined by the image values for each voxel of the residual area. In particular, a histogram represents the number of regions, in particular, voxels, that comprise image values, i.e. attenuation values, in predefined image value bins, respectively. The spectral image data decomposition unit can then be configured to determine the intensity measure and/or the correction value based on the histogram. For example, the intensity measure for a voxel can refer to an image value of a voxel above a predetermined threshold. In particular, the spectral image data decomposition unit can be adapted to determine the threshold depending on the histogram, for instance, based on the curvature of the histogram. Preferably, the threshold is determined such that the histogram shows a steep decrease of the amount of voxels in the region of threshold. A correction value can then be determined based on the intensity measure, for instance, by comparing voxels with image values above the threshold with image values of voxels below the threshold.

Moreover, the spectral image data decomposition unit is preferably configured to calculate the new basis decomposition such that all image values above the threshold are removed from the histogram. Preferably, the weights of the decomposed spectral image data are amended for a region comprising an image value above the threshold such that this image value is transferred from the weight of one basis function to the weight of another basis function. For instance, if the basis function refers to a function indicative of the Compton scattering effect and a function indicative of the photoelectric effect, the image values of voxels above the threshold in the histogram are transferred from the weight of the function indicative of the Compton scattering effect to the weight of the function indicative of the photoelectric effect.

In an embodiment, the spectral image data decomposition unit is configured for calculating the new basis decomposition to determine a similar area in the virtual non-contrast image for the residual area, wherein an area is similar to the residual area if image characteristics of the virtual non-contrast image in the area are similar to the image characteristics in the residual area, and to calculate the new decomposed spectral image data based on a comparison of the image values of the similar area and the residual area. Preferably, the spectral image data decomposition unit is configured for calculating the new basis decomposition to determine the similar area by comparing the image values of the residual area to image values of a plurality of candidate areas by applying a predefined distance norm and determining based on the predefined distance norm the nearest candidate area as the similar area. The distance norm can be, for instance, an $L^2$ norm, but can also be any other suitable distance norm like an $L^1$ norm, a mutual information measure, a total variation measure, etc. Based on the distance norm, the similar area is determined as the candidate area that has the lowest value, i.e. lowest distance, after applying the predefined distance norm. In particular, the result of the application of the distance norm can be regarded as a similarity measure between the residual area and a candidate area and the similar area can be determined based on this similarity measure. The spectral image data decomposition unit can be adapted to use the similar area as a model how the residual area should be when applying a correct decomposition image data. The spectral image data decomposition unit can thus be configured to calculate the new basis decomposition such that the residual area substantially corresponds to a similar area in order to reduce the contrast agent residual. For instance, the spectral image data decomposition unit can be adapted to determine a correction value for a part of the residual region based on a comparison of an image value of the part in the similar area and in the residual region. However, also other possibilities can be contemplated, for instance, determining the correction value based on an average image value of the similar area, etc.

In a preferred embodiment, the spectral image data decomposition unit is configured for calculating the new basis decomposition to compare the similar area with the residual area by determining a difference between each image value with a spatially corresponding image value of the residual area and to calculate the new decomposed image data based on the determined difference. The determined difference can be determined as the residual measure, wherein in this case it is preferred that the correction value is determined as being equal to the residual measure. In particular, the spectral image data decomposition unit can be configured to add the determined difference as correction value to the weight of one basis function and recalculate the weight of the other basis functions, accordingly. If the basis function refers to a function indicative of the Compton scattering effect and a function indicative of the photoelectric effect, the spectral image data decomposition unit is preferably adapted to remove the difference from the weights of the function indicative of the Compton scattering effect and adding the difference to the weight of the function indicative of the photoelectric effect.

In an embodiment, the spectral image data decomposition unit is configured for calculating the new basis decomposition to determine more than one similar area for the residual area and to determine a weighted average of all determined similar areas, wherein the residual area is compared to the weighted average of the similar areas. In particular, the weighted average of the similar areas can be defined as similar area. The more than one similar area can be determined as the candidate areas comprising a similarity measure indicating a similarity above a predefined threshold. Alternatively, the more than one similarity area can be determined by determining a predefined number of candidate areas as similarity areas, wherein the determined candidate areas comprise the highest similarities compared to all other candidate areas. The weights of the weighted average can be predetermined weights, can be selected automatically based on previous similar cases, for instance, cases with the same region of interest, or can be selected and/or changed by a user. The weights can then be based, for instance, on knowledge of the reliability of image values in different imaging regions of the spectral image data.

In an embodiment, the spectral image data decomposition unit is configured for calculating the new basis decomposition to: define the residual region as a missing data region, use an inpainting algorithm to estimate information in the missing data region, and calculate the residual measure based on the estimated information. For instance, an inpainting algorithm as disclosed in the article "Region filling and object removal by exemplar-based image inpainting" by A. Criminisi et al, IEEE Trans. Image Process., (2004) or a deep learning based inpainting algorithm as described in the article "Semantic Image Inpainting with Perceptual and Contextual Losses" by R. Yeh et al., IEEE Conf. on Computer Vision and Pattern Recognition, (2017) can be used for inpainting the residual region in the virtual non-contrast image, wherein the inpainted virtual non-contrast image can be used as basis for calculating the new basis decomposition, in particular, to correct the weights for the basis functions in the residual region. For example, the weights can be determined such that a virtual non-contrast image generated based on the new decomposed spectral image data is substantially similar to the inpainted virtual non-contrast image. In order to achieve this, the apparatus can be configured to utilize an iterative approach that is stopped when a difference between the new virtual non-contrast image, i.e. the virtual non-contrast image generated based on the decomposed spectral image data of the last iteration step, and the inpainted virtual non-contrast image is below a predetermined threshold. Additionally or alternatively, a residual measure can be determined based on the inpainted virtual non-contrast image, for instance, by determining the difference between an image value of the residual region and an image value of the inpainted virtual non-contrast image for corresponding parts. In this case it is preferred that the correction value is determined as being equal to the residual measure.

In another aspect of the invention, a method for determining decomposed spectral image data of a subject is presented, as disclosed in claim 13.

In another aspect of the invention, a computer program for correcting decomposed spectral image data of a subject is as disclosed in claim 14.

It shall be understood that the apparatus of claim 1, the method of claim 13, and the computer program of claim 14, have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

BRIEF DESCRIPTION OF THE DRAWINGS

In the following drawings:

Fig. 1 shows schematically and exemplarily an embodiment of a spectral imaging system comprising an apparatus for determining decomposed spectral image data of a subject,
Fig. 2 shows a flowchart exemplarily illustrating an embodiment of a method for determining decomposed spectral image data of a subject, and
Figs. 3 and 4 illustrate exemplary results of images generated based on the decomposed spectral image data.

DETAILED DESCRIPTION OF EMBODIMENTS

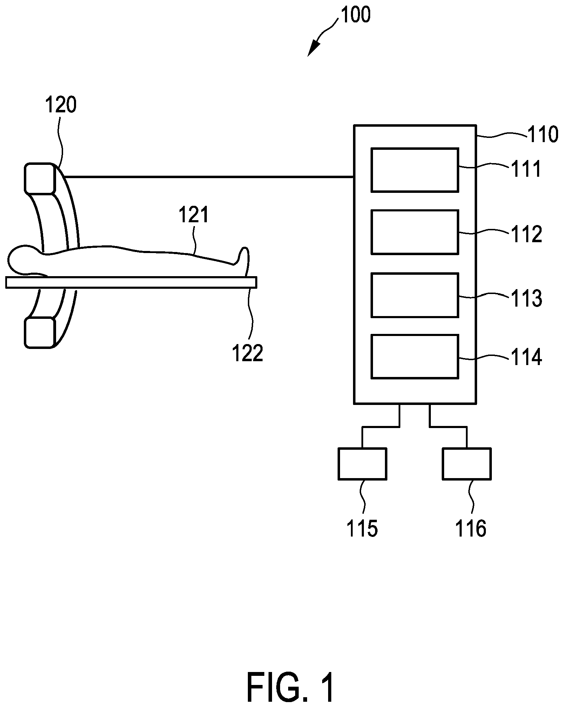

Fig. 1 shows schematically and exemplarily an embodiment of a spectral imaging system comprising an apparatus for determining decomposed spectral image data of a subject. In this embodiment, the spectral imaging system 100 comprises a spectral imaging unit 120, for instance, a dual energy x-ray CT imaging unit, for acquiring spectral image data of a region of interest of a patient 121 lying on a patient table 122. The patient 121 is injected before the acquisition of the spectral image data with a contrast agent, for instance, an iodine contrast agent. The spectral imaging system 100 comprises an apparatus 110 for determining the decomposed spectral image data of the patient.

The apparatus 110 comprises a spectral image data providing unit 111, a spectral image data decomposition unit 112, a virtual non-contrast image generation unit 113, and a contrast agent residual identification unit 114. Further, the apparatus 110 can comprise an input unit 115 like a mouse or a keyboard and/or a display unit 116, for instance, for displaying the virtual non-contrast image or other spectral images generated based on the decomposed spectral image data.

The spectral image data providing unit 111 is, in this example, configured to receive the spectral image data acquired by the spectral imaging unit 120. The spectral image data providing unit 111 can then provide the spectral image data to the spectral image data decomposition unit 112 for further processing.

The spectral image data decomposition unit 112 is configured to calculate a basis decomposition for the spectral image data, wherein the basis decomposition results in decomposed spectral image data. The decomposed spectral image data are indicative of weights provided to at least two basis functions of the spectral image data. Preferably, one of the basis functions refers to a function indicative of the Compton scattering effect on the attenuation of a material and the second basis function is indicative of the photoelectric effect on the attenuation of the material. In this case, the spectral image data decomposition unit can be adapted, for instance, to follow the following principles for calculating the decomposed spectral image data from the basis decomposition of the spectral image data.

Spectral or multi-energy CT imaging results in at least two attenuation values for each voxel acquired at at least two different radiation energies, wherein the attenuation values for each voxel form the spectral image data. The spectral image data can be used to determine the contributions or different basis functions to the attenuation of a material. Preferably, the contributions of the photoelectric effect, Compton scattering effect, and of other effects, for instance, effects of one or more K-edge, on the mass attenuation coefficient of a material are determined in a basis decomposition of the spectral image data. The resulting decomposed spectral image data allows for reconstructions of virtual monochromatic images, iodine concentration maps, virtual non-contrast images, etc., as well as conventional CT images.

One possible basis decomposition is based on the contribution of functions indicative of the energy dependence of the photoelectric effect and the Compton scattering effect as basis functions. In this case, an energy dependent attenuation of a material $\mu_i(E)$ can be approximated as a linear combination of the contributions of the two functions, i.e. the attenuation profiles of the photoelectric effect $C_i^P \mu_w^P (E)$ and Compton scattering effect $C_i^S \mu_w^S (E)$, in water through the equation:

$$\mu_i(E) = C_i^P \mu_w^P (E) + C_i^S \mu_w^S (E).$$

The contributions of the photoelectric effect and the Compton scattering effect are found in the weights $C_i^P$ and $C_i^S$, wherein for this example the weights $C_i^P$ and $C_i^S$ for each part of the imaged subject, in particular, for each voxel i of an image representation of the imaged subject, form the decomposed spectral image data. The decomposed spectral image data can be reconstructed from the corresponding spectral image data, for instance, from the line integrals $l^P$ and $l^S$ being indicative of $C_i^P$ and $C_i^S$. The line itegrals can be obtained from the spectral image data, if the spectral image data contain attenuation values from two different energy spectra $F_H$ and $F_L$ (L=low energy and H=high energy), through the equation:

$$P_{H/L} = \log \left( \frac{\int_0^\infty dE\ E \cdot F_{H/L}(E) \cdot \exp(-\mu_W^P (E) \cdot l^P - \mu_W^S(E) \cdot l^S)}{\int_0^\infty dE\ E \cdot F_{H/L}(E)} \right)$$

Here, $P_{H/L}$ refers to the spectral image data for high and low energy spectra, respectively, for each part of the object, $E$ is the energy and the terms $F_{H/L}(E)$ are the flux of the high- and low-spectrum, obtained by modelling the flux emitted towards the detector pixel from the upper beam, and the detector response. The difference between the two spectra can result, for instance, from the tube modulation or from two detector layers. The terms $l^{P/S}$ are the photoelectric and scatter equivalent paths in water, and $\mu_W^{P/S}(E)$ are the energy dependent attenuation coefficients of these two mechanisms, i.e. the basis functions representing the photoelectric effect and the Compton scattering effect. $I^P$ and $I^S$ can be solved by inverting the above equation, which amounts to a mapping function from the domain of $p_L$ and $p_H$ into the domain of the $p_s$ and $p_p$:

$$p_s, p_p = D(p_L, p_H)$$

Here, $p_s$ and $p_p$ are obtained from $I^{P/S}$ by multiplying them with fixed scalar attenuation coefficients in order to process later on dimensionless preparation values for convenience. $D(p_L, p_H)$ can be solved, for instance, through a polynomial function or a look-up table. Further details of a determination of decomposed spectral image data that can be utilized by the spectral image data decomposition unit 112 can be found in the article "Energy-selective reconstructions in x-ray computerized tomography. ", Alvarez et al., Physics in Medicine & Biology 21.5 (1976).This mathematical process is an example, how decomposed spectral image data can be obtained. For other combinations of basis functions similar principles can be utilized.

In practice, the decomposition process is generally sub-optimal, mainly caused by including the sub-optimal separation of the flux into high energy and low energy photons at the detector and the non-linearity of the decomposition function $D(p_L, p_H)$ among others. This leads to inaccurate contrast agent concentration estimations as well as to visible image artifacts in virtual monochromatic images, which may hamper clinical utilization of spectral CT.

The virtual non-contrast image generation unit 113 is then configured to generate a virtual non-contrast image based on the decomposed spectral image data, wherefrom said image data a general contrast agent contribution is removed. If the basis functions comprise at least a function indicative of the photoelectric effect on the attenuation and a function indicative of the Compton scattering effect on the attenuation, the weights, i.e. contributions, of these two functions form part of the decomposed spectral image data and can be represented in form of a photoelectric image and a Compton scattering image. The virtual non-contrast image generation unit 113 can be configured, for instance, to generate the virtual non-contrast image based on the photoelectric and Compton scattering images, i.e. on the decomposed spectral image data, by removing the contrast agent contribution to the photoelectric and Compton scattering images. A detailed description of a method for generating the virtual non-contrast images from the decomposed spectral image data that can be used by the virtual non-contrast image generation unit 113 can be found, for instance, in the article "An iodine-calcium separation analysis and virtually non-contrasted image generation obtained with single source dual energy MDCT", Goshen et al., IEEE Nuclear Science Symposium Conference Record, pages 3868-3870 (2008).

The contrast agent residual identification unit 114 is then configured to identify a residual region comprising a potential contrast agent residual in the virtual non-contrast image based on an expected structural characteristic of the contrast agent residual. If the predefined combination of the decomposed spectral image data (for each voxel the contributions of at least two basis functions to the overall mass attenuation coefficient of the material found in this part of the subject) was performed with less accurate decomposition of said image spectral image data, the virtual non-contrast image will have residual regions comprising remaining contributions of the contrast agent, which generally should have been removed upon generation of the virtual non-contrast image. The contrast agent residual identification unit 114 can be configured to provide a selection of the applied contrast agent to a user, wherein then based on the selected contrast agent the expected structural characteristics can be predetermined. However, the contrast agent residual identification unit 114 can also be adapted to present different expected structural characteristics to a user, wherein the user can then select the most expected structural characteristics of the contrast agent residual for the current case. In the following example, it is assumed that the contrast agent is a iodine based contrast agent and is in particular utilized to enhance the visibility of a vascular structure of the patient 121. However, in other examples the contrast agent can be any other contrast agent and can be utilized to enhance other anatomical structures in the patient 121.

In the preferred example, the iodine based contrast agent residual utilized for enhancing the vascular structure in the region of interest of the patient 121 most likely results in contrast agent residuals with a tubular shape. In this case, the contrast agent residual identification unit 114 can be configured to apply a vesselness filter to the virtual non-contrast image such that regions of the virtual non-contrast image comprising tubular shaped structures can be identified. These identified regions are regarded as residual regions comprising a contrast agent residual.

Alternatively, the contrast agent residual identification unit 114 can be configured to utilize a machine learning based classification algorithm, preferably a deep learning based classification algorithm, to the virtual non-contrast image to identify the residual regions in the virtual non-contrast image. Preferably, a neural network with a U-net shaped architecture is used. An example for a deep neural network architecture that could be used by the contrast agent residual identification unit 114 to identify the residual regions can be found in the article "Fully convolutional networks for semantic segmentation", Long et al., In Proceedings of the IEEE conference on computer vision and pattern recognition, pages 3431-3440 (2015).

The result of such a network or of the vesselness filter can be, for instance, a mask that enhances voxels of the virtual non-contrast image that belong to a contrast agent residual. Thus, based on the identification of the residual region, the parts of the virtual non-contrast image that comprise contrast agent residuals are known.

Based on the residual region, the spectral image data decomposition unit 112 is configured to calculate a new basis decomposition at least for the residual regions by recalculating the weights provided to the basis functions at least in the residual regions such that a contrast agent residual can be reduced. In a preferred embodiment, the spectral image data decomposition unit 112 is configured to define a residual area containing the residual region in the virtual non-contrast image. The spectral image data decomposition unit 112 can, for instance, be adapted to define an elliptical, circular, rectangular or arbitrary shaped area surrounding the residual region as a residual area. The residual area may therefore be larger than the residual region. In this way, the residual area contains the (immediate) surroundings of the residual region, thereby providing additional context on the residual region. Based on this defined residual area, the spectral image data decomposition unit 112 is preferably adapted to determine a residual measure indicative of the intensity of the contrast residual of the residual region based on the residual area. The residual measure can also be regarded as being indicative of the level of inaccuracy of the material decomposition in the residual area.

In order to determine a residual measure and further in order to reduce or, if possible, remove the contrast agent residual the spectral image data decomposition unit 112 can be adapted to determine for the residual area a histogram. A histogram is defined as providing for a plurality of image value bins the number of voxels in the residual area falling into these bins, i.e. comprising an image value falling into these bins, respectively. The spectral image data decomposition unit 112 can then be adapted to utilize an image value threshold to determine a residual measure based on image values above the threshold. The threshold can be predetermined or can be determined based on the histogram such that image values above the threshold belong to the "right tail" of the histogram. The "right tail" refers to image values that follow a steep descent of the curvature of the histogram in the direction of higher image values. The residual measure can then be determined for each voxel comprising an image value above the threshold such that the image values of these voxels are removed. For instance, the residual measure can be equal to the image values found above the threshold. In this case a correction value for each voxel comprising an image value above the threshold can be determined as being equal to the residual measure and can be transferred from the weight of the function indicative of the Compton scattering effect to the weight of the function indicative of the photoelectric effect.

Alternatively, the spectral image data decomposition unit 112 can be adapted to base the calculation of the new basis decomposition on a similar area, i.e. an area in the virtual non-contrast image that is similar to the residual area. In this embodiment the spectral image data decomposition unit 112 is configured to search for an area similar to the inaccurate residual area. Then, the spectral image data decomposition unit 112 is configured to determine a residual measure that is indicative of the level of material decomposition inaccuracy as the difference between an image value of a voxel in the residual area and an image value of a corresponding voxel in the similar area.

For example, for a given residual area indicating an inaccurate material decomposition, the spectral image data decomposition unit 112 can be configured to find the most similar area $p'$ from a group of candidate areas sampled from the virtual non-contrast image by using the $L^2$-norm as distance measure between the areas:

$$\widehat{p'} = arg \min_{p' \epsilon P} \left\| \chi_p (p' - p) \right\|^2$$

wherein $\chi_p$ is an indicator function equal to 1 for all voxels except voxels suspected for inaccurate material decomposition. A candidate area for which the distance measure indicates the most similarity to the residual area compared to all other candidate areas is then determined as similar area.

The spectral image data decomposition unit 112 can then be configured to determine the residual measure as the difference between the image value of a voxel $p(x)$ in the residual area and the image value of a corresponding voxel $p'(x)$ in the similar area. In this case the spectral image data decomposition unit 112 can be configured to determine the residual measure as correction value and, for instance, to correct an image value of the virtual non-contrast image in the residual area by subtracting the correction value of a voxel in the residual area from a corresponding voxel in the virtual non-contrast image:

$$\widehat{p(x)} = p(x) - \left( p'(x) - p(x) \right)$$

The new basis decomposition can then be calculated based on the corrected virtual non-contrast image, for instance, by recalculating the weights of the basis functions such that in the residual area in the virtual non-contrast image the weights combine to the corrected image values. Moreover, the spectral image data decomposition unit 112 can be configured to directly apply the correction value to the weights of the basis functions, i.e. the decomposed spectral data. For example, a new value of a weight indicative of the contribution of the Compton scattering effect to the attenuation, i.e. a new image value for the Compton scattering image, can be calculated by applying the correction value in accordance with the above formulas to the Compton scattering image $p_s$, and can update the photoelectric image $p_p$ , i.e. the weight indicative of the contribution of the photoelectric effect, as follows:

$$\widehat{p_p(x)} = p_p(x) + \left(p'_s(x) - p_s(x)\right)$$

However, the spectral image data decomposition unit 112 can also be adapted to utilize other mathematical possibilities for correcting the decomposed spectral image data based on the determined residual measure.

Additionally or alternatively, the spectral image data decomposition unit 112 can also be adapted to find more than one similar area rather than just the one similar area being the most similar candidate area. For instance, the spectral image data decomposition unit 112 can be adapted to determine, based on the chosen distance norm, the three most similar candidate areas as similarity areas. The spectral image data decomposition unit 112 can then be configured to estimate the residual measure, i.e. the inaccurate material decomposition, as the difference between image value of a voxel in the residual area and a weighted average of image values of corresponding voxels in the most similar areas.

Additionally or alternatively, to determine a residual area, the spectral image data decomposition unit 112 can also be adapted to define the residual region as a missing data region and to use an inpainting algorithm for calculating the new decomposed spectral image data. For instance, the spectral image decomposition unit 112 can simply treat all voxels belonging to the residual region comprising the contrast agent residual, i.e. potential inaccurate spectral CT material decomposition values, as missing voxels. Generally known inpainting algorithms can then be used by the spectral image data decomposition unit 112 to estimate the information in the missing voxels. Based on the estimated information in the missing voxels, the spectral image data decomposition unit 112 can then be configured to determine the new basis decomposition. For instance, a difference between an image value of a voxel in the residual region and the image value of this voxel after the application of the inpainting algorithm can be calculated as residual measure that can also refer to the correction value. The correction value, here the difference, can then be used for correcting the decomposed spectral image data, i.e. for calculating the new basis decomposition. One possibility is for this case, if the basis decomposition refers to a function indicative of the Compton scattering effect and a function indicative of the photoelectric effect, to add the difference to the weight of the Compton scattering function and subtract this difference from the weight of the photoelectric function. However, also other mathematical methods for correcting the weights of the basis functions during the decomposition based on the information provided by the inpainting algorithm can be used.

The above described embodiments for reducing the contrast agent residuals and thus correcting the decomposed spectral image data can all also be used in an iterative approach. In such an iterative approach, the spectral image data decomposition unit 112 is adapted to apply at least one of the above mentioned methods and to provide the new decomposed spectral image data again to the virtual non-contrast image generation unit 113. Based on the new generated virtual non-contrast image, again the contrast agent residual identification unit 114 can be configured to identify a residual region if at least one contrast agent residual is still present in the virtual non-contrast image. Then, again, the spectral image data decomposition unit 112 can apply one of the above methods for further reducing the contrast agent residual. In particular, the spectral image data decomposition unit 112 can apply the same or a different method than in a previous iterative step. The iteration can be stopped when the contrast agent residual identification unit 114 cannot identify a remaining potential contrast agent residual or, for instance, if a remaining potential contrast agent residual comprises a residual measure below a predetermined threshold. Additionally or alternatively, the virtual non-contrast image resulting from each iterative step of the iteration can also be presented to a user like a physician using, for instance, the display unit 116, wherein then the user can use the input unit 115 to decide whether or not the iteration should be carried on or if the iteration could be stopped.

The resulting corrected decomposed spectral image data can then be used for generating a plurality of spectral images, for instance, Compton scattering images, photoelectric images, virtual non-contrast images, mono energy images, etc. that comprise an improved accuracy due to the improved accuracy of the decomposed spectral image data. Moreover, the spectral image data decomposition unit 112 can be adapted to directly generate an improved virtual non-contrast image based on the residual measure, for instance, by directly applying a correction value derived from the residual measure to the residual region in the virtual non-contrast image. The apparatus 110 can then be adapted to present at least one of the generated spectral images to a user like a physician on the display unit 116.

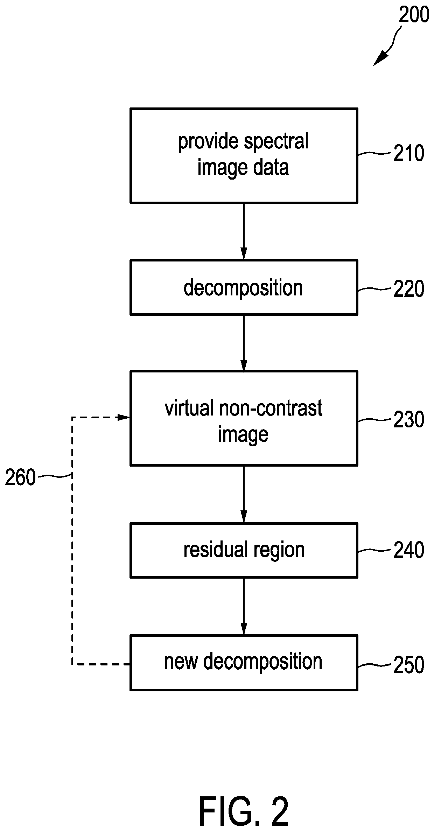

Fig. 2 shows schematically and exemplarily an embodiment of a method for determining decomposed spectral image data of a subject having been injected with the contrast agent prior to the acquisition of spectral image data using, for instance, the spectral imaging unit 120. In a first step 210, the method 200 comprises providing spectral image data of the subject that has been acquired using, for instance, the spectral x-ray imaging unit 120. In a second step 220, a basis decomposition for the spectral image data is calculated as discussed above. Based on the resulting decomposed spectral image data, in step 230 a virtual non-contrast image is generated, wherefrom a general contribution of the contrast agent to the decomposed spectral image is removed. In the virtual non-contrast image, a residual region, characteristic of the remaining contrast agent contribution, is identified in step 240, wherein the residual region comprises a contrast agent residual. The residual region is in particular identified based on an expected structural characteristic of the contrast agent residual. In step 250, new decomposed spectral image data are then calculated by calculating a new basis decomposition in the residual region such that a contrast agent residual is reduced. The new decomposed spectral image data are calculated by determining a residual measure for the residual region, wherein the residual measure is indicative of an intensity of the contrast agent residual of the residual region, and recalculating the weights provided to the basis functions of the spectral image data in the residual region based on the residual measure. Optionally, the method can be used iteratively, wherein in this case, as indicated by arrow 260, after step 250 the method again goes to step 230 by providing the new decomposed spectral image data as basis for generating a new virtual non-contrast image. The iteration can be stopped by using a suitable stopping criteria as explained above with respect to the apparatus 110.

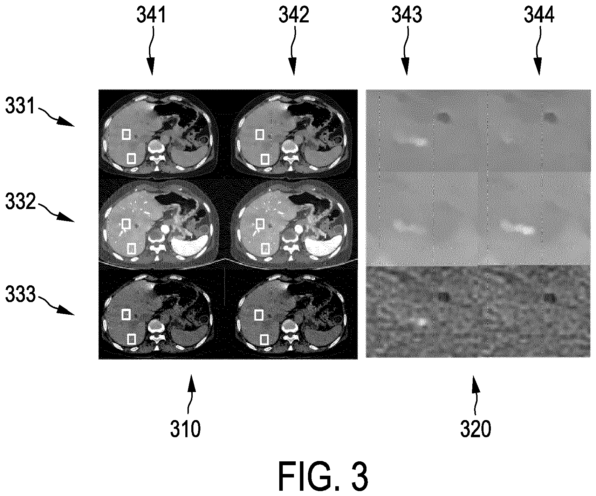

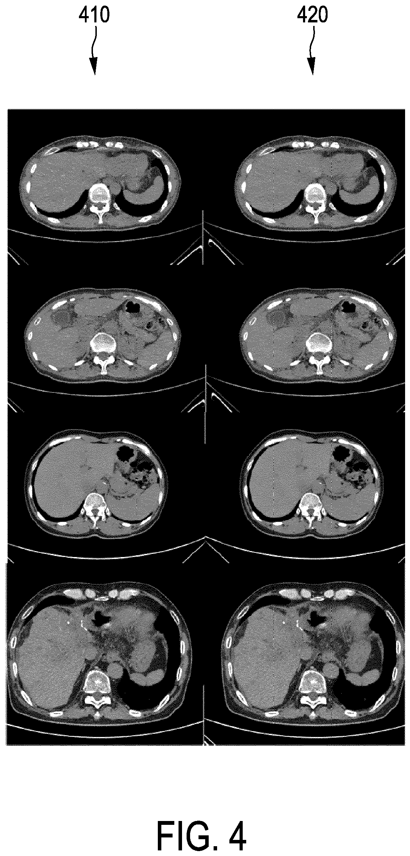

Figs. 3 and 4 illustrate exemplary results of images generated based on the decomposed spectral image data. In particular, Fig. 3 provides a comparison between images generated based on decomposed spectral image data that have not been corrected and images that have been generated based on corrected decomposed spectral image data. The images in the panel 310 refer to full slice images, whereas the images in the panel 320 refer to a zoom-in view on one contrast agent residual as identified in the images of the panel 310. Columns 341 and 343 refer to images generated based on decomposed spectral image data without a contrast agent residual correction and columns 342 and 344 refer to images resulting from corrected decomposed spectral image data. The first row 331 refers to Compton scattering images, the second row 332 to photoelectric images and the last row 333 to virtual non-contrast images. The small rectangles shown in the panel 310 images indicate parts of the images in which residuals that are based on the non-corrected decomposed spectral image data can be found. It can be shown exemplarily in these images that contrast agent residuals visible, for instance, in the virtual non-contrast image that is based on the non-corrected decomposed spectral image data, are eliminated in the virtual non-contrast image that is based on the corrected decomposed spectral image data. Thus, it is clear that the spectral image data decomposition after the correction according to the above explained embodiments is more accurate.

The same increase in accuracy can be shown in the images of Fig. 4. In Fig. 4, the image slices on the left column 410 again refer to virtual non-contrast images based on non-corrected decomposed spectral image data, whereas the images in the right column 420 refer to virtual non-contrast images that are generated based on corrected decomposed spectral image data. It can clearly be seen that contrast agent residuals visible in the right images are eliminated in the images of the left column 420. Thus, also these images show that after the application of the invention as described above, the resulting decomposed spectral image data are more accurate.

Spectral CT is suggested as a technique to better characterize human anatomy and function with multiple clinical applications. The spectral CT utilizes multiple attenuation values acquired at multiple different photon energies to solve for the various components contributions to the overall mass attenuation coefficient of a material. However, the available sub-optimal decomposition processes yield inaccuracies in the material decomposition resulting in inaccurate contrast agent concentration estimations among others. These inaccuracies hamper the clinical utilization of spectral CT.

In this invention, for instance, a shape-constrained approach for spectral CT material decomposition is proposed that reduces the amount of material decomposition inaccuracies by analyzing the shape of potential residuals and subsequently applying a correction to the decomposition, for instance, to the photoelectric and Compton scattering components, using a personalized statistical model. This approach improves the accuracy of spectral CT material decomposition resulting in better quality spectral results such as virtual non-contrast images.

For instance, spectral image data with at least two energy levels that allow spectral analysis is acquired. Examples include but are not limited to, CT images of the anatomy of interest reconstructed from CT projection data acquired with a dual-layer detector system that separates the x-ray flux at the detector into two levels of energy. Also, spectral CT data acquired by a photon-counting scanner can be used. Material decomposition inaccuracies can then be detected by analyzing a virtual non-contrast image, which should be free of any contribution by a contrast agent. The decomposition accuracies can then be corrected directly in the virtual non-contrast image and/or in the photoelectric and/or Compton scattering images referring to a recalculation of the decomposition using a personalized statistical model.

Although it is preferred that the patient is injected with the iodine based contrast agent before acquiring the spectral images, also other contrast agents, like barium based contrast agents, could be applied.

Although in the above mentioned embodiments for correcting the decomposed spectral image data the spectral image data decomposition unit is adapted to determine a residual measure and based on the residual measure a correction value, in other embodiments the spectral image data decomposition unit can also be adapted to recalculate, in particular, correct the basis decomposition without determining a residual measure. For instance, the spectral image data decomposition unit can be adapted to apply a machine learning algorithm to the residual region that has been trained to correct the basis decomposition based on the residual region.

It shall be understood by the skilled in the art person that the apparatus for determining decomposed spectral image of the present invention may also include the spectral x-ray imaging apparatus 120 as a source of the spectral image data of the subject.

Other variations to the disclosed embodiments can be understood and effected by those skilled in the art in practicing the claimed invention from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Procedures like the providing of the spectral image data, the calculating of the decomposed spectral image data, the generating of the virtual non-contrast image, the identifying of the residual region, etc., performed by one or several units or devices can be performed by any other number of units or devices. These procedures can be implemented as program code means of a computer program and/or as dedicated hardware.

A computer program may be stored/distributed on a suitable medium, such as an optical storage medium or a solid-state medium, supplied together with or as part of other hardware, but may also be distributed in other forms such as via the Internet or other wired or wireless telecommunication systems.

Any reference signs in the claims should not be construed as limiting the scope.

The invention refers to an apparatus for determining decomposed spectral image data with an improved accuracy. The apparatus comprises a spectral image data providing unit for providing spectral image data, a spectral image data decomposition unit for calculating a basis decomposition for the spectral image data, a virtual non-contrast image generation unit for generating a virtual non-contrast image based on the decomposed spectral image data, and a contrast agent residual identification unit for identifying a residual region comprising a contrast agent residual in the virtual non-contrast image based on an expected structural characteristic of the contrast agent residual, wherein the spectral image data decomposition unit is configured to calculate a new basis decomposition in the residual region. Utilizing structural characteristics of the contrast agent residual allows for a very accurate determination of contrast agent residuals and an improvement of the decomposition accuracy in this area The invention is defined by the appended claims.

## Claims

**1.** An apparatus for determining decomposed spectral image data of a subject (121), wherein the apparatus (110) comprises:

a spectral image data providing unit (111) configured to provide spectral image data of the subject that has been injected with a contrast agent, wherein the spectral image data of the subject has been acquired using a spectral x-ray imaging apparatus (120),
a spectral image data decomposition unit (112) configured to calculate a basis decomposition for the spectral image data, wherein the basis decomposition results in decomposed spectral image data, wherein the decomposed spectral image data are indicative of weights provided to at least two basis functions of the spectral image data,
a virtual non-contrast image generation unit (113) configured to generate a virtual non-contrast image based on a predefined combination of the decomposed spectral image data, and
a contrast agent residual identification unit (114) configured to identify a residual region comprising a contrast agent residual in the virtual non-contrast image based on an expected structural characteristic of the contrast agent residual, wherein the contrast agent residual is a contribution of the contrast agent to an attenuation of a part of the subject represented by image values of the virtual non-contrast image,
wherein the spectral image data decomposition unit (112) is configured to:

determine a residual measure for the residual region, wherein the residual measure is indicative of an intensity of the contrast agent residual of the residual region, and
calculate a new basis decomposition in the residual region by correcting the weights provided to the basis functions of the spectral image data in the residual region by adding or subtracting a correction value to the weights of at least one of the basis functions, wherein the correction value is determined based on the residual measure, such that the contrast agent residual is reduced, wherein the spectral image data decomposition unit (112) is configured to define a residual area containing the residual region in the virtual non-contrast image, and comprises a margin of one or two voxels surrounding the residual region, wherein determining the residual measure is further based on the defined residual area.

**2.** The apparatus according to claim 1, wherein the spectral image data decomposition unit (112) is configured for calculating the new basis decomposition to determine for the residual area a histogram defined by image values of each region within the residual area and to calculate the new decomposed spectral image data based on the histogram.

**3.** The apparatus according to claim 1, wherein the spectral image data decomposition unit (112) is configured for calculating the new basis decomposition to determine a similar area in the virtual non-contrast image for the residual area, wherein an area is similar to the residual area if image characteristics of the virtual non-contrast image in the area are similar to the image characteristics in the residual area, and to calculate the new decomposed spectral image data based on a comparison of the image values of the similar area and the residual area.

**4.** The apparatus according to claim 3, wherein the spectral image data decomposition unit (112) is configured for calculating the new basis decomposition to determine the similar area by comparing the image values of the residual area to image values of a plurality of candidate areas by applying a predefined distance norm and determining based on the predefined distance norm the nearest candidate area as the similar area.

**5.** The apparatus according to any of claims 3 and 4, wherein the spectral image data decomposition unit (112) is configured for calculating the new basis decomposition to compare the similar area with the residual area by determining a difference between each image value with a spatially corresponding image value of the residual area and to calculate the new decomposed image data based on the determined difference.

**6.** The apparatus according to any of claims 4 to 5, wherein the spectral image data decomposition unit (112) is configured for calculating the new basis decomposition to determine more than one similar area for the residual area and to determine a weighted average of all determined similar areas, wherein the residual area is compared to the weighted average of the similar areas.

**7.** The apparatus according to claim 1, wherein the spectral image data decomposition unit (112) is configured for calculating the new basis decomposition to:

define the residual region as a missing data region,
use an inpainting algorithm to estimate information in the missing data region, and
calculate the residual measure based on the estimated information.

**8.** The apparatus according to any of the preceding claims, wherein the expected structural characteristic refers to a tubular shape and wherein the contrast agent residual identification unit (114) is adapted to identify the residual region by applying a vesselness filter to the virtual non-contrast image.

**9.** The apparatus according to any of the preceding claims, wherein the contrast agent residual identification unit (114) is configured to apply a machine learning based classification algorithm to the virtual non-contrast image for detecting the residual region.

**10.** The apparatus according to claim 9, wherein the machine learning based classification algorithm refers to a deep neural network architecture.

**11.** The apparatus according to any of the preceding claims, wherein the contrast agent refers to a iodine contrast agent.

**12.** The apparatus according to any of the preceding claims, wherein the basis functions are at least indicative of a function defining the energy dependence of attenuation on the Compton scattering effect and a function defining the energy dependence of the attenuation on the photoelectric effect.

**13.** Computer implemented method for determining decomposed spectral image data of a subject, wherein the method (200) comprises:

providing (210) spectral image data of the subject that has been injected with a contrast agent, wherein the spectral image data of the subject have been acquired using a spectral x-ray imaging apparatus (120),
calculating (220) a basis decomposition for the spectral image data, wherein the basis decomposition results in decomposed spectral image data, wherein the decomposed spectral image data are indicative of weights provided to at least two basis functions of the spectral image data,

generating (230) a virtual non-contrast image based on a predefined combination of the decomposed spectral image data, and

identifying (240) a residual region comprising a contrast agent residual in the virtual non-contrast image based on an expected structural characteristic of the contrast agent residual, wherein the contrast agent residual is a contribution of the contrast agent to an attenuation of a part of a subject represented by image values of the virtual non-contrast image,

determining a residual measure for the residual region, wherein the residual measure is indicative of an intensity of the contrast agent residual of the residual region, and

calculating (250) a new basis decomposition in the residual region by correcting the weights provided to the basis functions of the spectral image data in the residual region by adding or subtracting a correction value to the weights of at least one of the basis functions, wherein the correction value is determined based on the residual measure, such that the contrast agent residual is reduced,

wherein the method further comprises defining a residual area containing the residual region in the virtual non-contrast image, and comprises a margin of one or two voxels surrounding the residual region, wherein determining the residual measure is further based on the defined residual area.

**14.** A computer program for correcting decomposed spectral image data of a subject, wherein the computer program comprises program code means for causing a computer to carry out the steps of the method as defined in claim 13 when the computer program is executed by the computer.

**Patentansprüche**

**1.** Einrichtung zum Bestimmen zerlegter Spektralbilddaten eines Subjekts (121), wobei die Einrichtung (110) umfasst:

eine Spektralbilddatenbereitstellungseinheit (111), die dazu konfiguriert ist, Spektralbilddaten des Subjekts, dem ein Kontrastmittel injiziert wurde, bereitzustellen, wobei die Spektralbilddaten des Subjekts unter Verwendung einer spektralen Röntgenbildgebungseinrichtung (120) erhoben wurden,

eine Spektralbilddatenzerlegungseinheit (112), die dazu konfiguriert ist, eine Basiszerlegung für die Spektralbilddaten zu berechnen, wobei die Basiszerlegung zerlegte Spektralbilddaten ergibt, wobei die zerlegten Spektralbilddaten auf Gewichtungen hinweisen, die an mindestens zwei Basisfunktionen der Spektralbilddaten bereitgestellt werden,

eine Erzeugungseinheit (113) eines virtuellen Bildes ohne Kontrastmittel, die dazu konfiguriert ist, ein virtuelles Bild ohne Kontrastmittel basierend auf einer vordefinierten Kombination der zerlegten Spektralbilddaten zu erzeugen, und

eine Kontrastmittelrest-Identifizierungseinheit (114), die dazu konfiguriert ist, einen Restbereich, der einen Kontrastmittelrest in dem virtuellen Bild ohne Kontrastmittel umfasst, basierend auf einer erwarteten Struktureigenschaft des Kontrastmittelrests zu identifizieren, wobei der Kontrastmittelrest ein Beitrag des Kontrastmittels zu einer Abschwächung eines Teils des Subjekts ist, der durch Bildwerte des virtuellen Bildes ohne Kontrastmittel dargestellt wird,

wobei die Spektralbilddatenzerlegungseinheit (112) dazu konfiguriert ist:

ein Restmaß für den Restbereich zu bestimmen, wobei das Restmaß auf eine Intensität des Kontrastmittelrestes des Restbereichs hinweist, und

eine neue Basiszerlegung in dem Restbereich durch Korrigieren der den Basisfunktionen der Spektralbilddaten in dem Restbereich bereitgestellten Gewichtungen durch Addieren oder Subtrahieren eines Korrekturwerts zu den Gewichtungen von mindestens einer der Basisfunktionen zu berechnen, wobei der Korrekturwert basierend auf dem Restmaß derart bestimmt wird, dass der Kontrastmittelrest reduziert wird, wobei die Spektralbilddatenzerlegungseinheit (112) dazu konfiguriert ist, eine Restlage zu definieren, die den Restbereich in dem virtuellen Bild ohne Kontrastmittel enthält, und einen Rand von einem oder zwei Voxeln umfasst, der den Restbereich umgibt, wobei das Bestimmen des Restmaßes weiter auf der definierten Restlage basiert.

**2.** Einrichtung nach Anspruch 1, wobei die Spektralbilddatenzerlegungseinheit (112) zum Berechnen der neuen Basiszerlegung konfiguriert ist, um für die Restlage ein Histogramm zu bestimmen, das durch Bildwerte jedes Bereichs innerhalb der Restlage definiert ist, und die neuen zerlegten Spektralbilddaten basierend auf dem Histogramm zu berechnen.

3. Einrichtung nach Anspruch 1, wobei die Spektralbilddatenzerlegungseinheit (112) zum Berechnen der neuen Basiszerlegung konfiguriert ist, um eine ähnliche Lage in dem virtuellen Bild ohne Kontrastmittel für die Restlage zu bestimmen, wobei eine Lage der Restlage ähnlich ist, wenn Bildeigenschaften des virtuellen Bildes ohne Kontrastmittel in der Lage den Bildeigenschaften der Restlage ähnlich sind, und die neuen zerlegten Spektralbilddaten basierend auf einem Vergleich der Bildwerte der ähnlichen Lage und der Restlage zu berechnen.

4. Einrichtung nach Anspruch 3, wobei die Spektralbilddatenzerlegungseinheit (112) zum Berechnen der neuen Basiszerlegung konfiguriert ist, um die ähnliche Lage durch Vergleichen der Bildwerte der Restlage mit Bildwerten einer Vielzahl von Kandidatenlagen durch Anwenden einer vordefinierten Distanznorm und Bestimmen der nächstgelegenen Kandidatenlage als die ähnliche Lage basierend auf der vordefinierten Distanznorm zu bestimmen.

5. Einrichtung nach einem der Ansprüche 3 und 4, wobei die Spektralbilddatenzerlegungseinheit (112) dazu konfiguriert ist, die neue Basiszerlegung zu berechnen, um die ähnliche Lage mit der Restlage durch Bestimmen einer Differenz zwischen jedem Bildwert mit einem räumlich entsprechenden Bildwert der Restlage zu vergleichen und die neuen zerlegten Bilddaten basierend auf der bestimmten Differenz zu berechnen.

6. Einrichtung nach einem der Ansprüche 4 bis 5, wobei die Spektralbilddatenzerlegungseinheit (112) zum Berechnen der neuen Basiszerlegung konfiguriert ist, um mehr als eine ähnliche Lage für die Restlage zu bestimmen und einen gewichteten Durchschnitt aller bestimmten ähnlichen Lagen zu bestimmen, wobei die Restlage mit dem gewichteten Durchschnitt der ähnlichen Lagen verglichen wird.

7. Einrichtung nach Anspruch 1, wobei die Spektralbilddatenzerlegungseinheit (112) dazu konfiguriert ist, die neue Basiszerlegung zu berechnen, um:

   den Restbereich als einen fehlenden Datenbereich zu definieren, einen Inpainting-Algorithmus zu verwenden, um Informationen in dem fehlenden Datenbereich zu schätzen, und
   das Restmaß basierend auf den geschätzten Informationen zu berechnen.

8. Einrichtung nach einem der vorstehenden Ansprüche, wobei die erwartete Struktureigenschaft eine röhrenförmige Gestalt betrifft, und wobei die Kontrastmittelrest-Identifizierungseinheit (114) dazu angepasst ist, den Restbereich durch Anwenden eines Vesselness-Filters auf das virtuelle Bild ohne Kontrastmittel zu identifizieren.

9. Einrichtung nach einem der vorstehenden Ansprüche, wobei die Kontrastmittelrest-Identifizierungseinheit (114) dazu konfiguriert ist, einen auf maschinellem Lernen basierenden Klassifizierungsalgorithmus zum Erkennen des Restbereichs auf das virtuelle Bild ohne Kontrastmittel anzuwenden.

10. Einrichtung nach Anspruch 9, wobei der auf maschinellem Lernen basierende Klassifizierungsalgorithmus eine tiefe neuronale Netzarchitektur betrifft.

11. Einrichtung nach einem der vorstehenden Ansprüche, wobei das Kontrastmittel ein Jodkontrastmittel betrifft.

12. Einrichtung nach einem der vorstehenden Ansprüche, wobei die Basisfunktionen mindestens auf eine Funktion hinweisen, die die Energieabhängigkeit einer Abschwächung von dem Compton-Streueffekt definiert, und eine Funktion, die die Energieabhängigkeit der Abschwächung von dem photoelektrischen Effekt definiert.

13. Computerimplementiertes Verfahren zum Bestimmen zerlegter Spektralbilddaten eines Subjekts, wobei das Verfahren (200) umfasst:

   Bereitstellen (210) von Spektralbilddaten des Subjekts, dem ein Kontrastmittel injiziert wurde, wobei die Spektralbilddaten des Subjekts unter Verwendung einer spektralen Röntgenbildgebungseinrichtung (120) erhoben wurden,
   Berechnen (220) einer Basiszerlegung für die Spektralbilddaten, wobei die Basiszerlegung zerlegte Spektralbilddaten ergibt, wobei die zerlegten Spektralbilddaten auf Gewichtungen hinweisen, die an mindestens zwei Basisfunktionen der Spektralbilddaten bereitgestellt werden,
   Erzeugen (230) eines virtuellen Bildes ohne Kontrastmittel basierend auf einer vordefinierten Kombination der zerlegten Spektralbilddaten, und
   Identifizieren (240) eines Restbereichs, der einen Kontrastmittelrest in dem virtuellen Bild ohne Kontrastmittel umfasst, basierend auf einer erwarteten Struktureigenschaft des Kontrastmittelrests, wobei der Kontrastmittelrest ein Beitrag des Kontrastmittels zu einer Abschwächung eines Teils eines Subjekts ist, der durch Bildwerte des virtuellen Bildes ohne Kontrastmittel dargestellt wird,

Bestimmen eines Restmaßes für den Restbereich, wobei das Restmaß auf eine Intensität des Kontrastmittelrestes des Restbereichs hinweist, und

Berechnen (250) einer neuen Basiszerlegung in dem Restbereich durch Korrigieren der Gewichtungen, die an die Basisfunktionen der Spektralbilddaten in dem Restbereich bereitgestellt werden, durch Addieren oder Subtrahieren eines Korrekturwerts zu/von den Gewichtungen mindestens einer der Basisfunktionen, wobei der Korrekturwert basierend auf dem Restmaß derart bestimmt wird, dass der Kontrastmittelrest reduziert wird, wobei das Verfahren weiter das Definieren einer Restlage umfasst, die den Restbereich in dem virtuellen Bild ohne Kontrastmittel enthält, und einen Rand von einem oder zwei Voxeln umfasst, der den Restbereich umgibt, wobei das Bestimmen des Restmaßes weiter auf der definierten Restlage basiert.

**14.** Computerprogramm zum Korrigieren zerlegter Spektralbilddaten eines Subjekts, wobei das Computerprogramm Programmcodemittel umfasst, um einen Computer zu veranlassen, die Schritte des Verfahrens nach Anspruch 13 auszuführen, wenn das Computerprogramm von dem Computer ausgeführt wird.

## Revendications

**1.** Appareil pour déterminer des données d'image spectrale décomposées d'un sujet (121), dans lequel l'appareil (110) comprend :

une unité de fourniture de données d'image spectrale (111) configurée pour fournir des données d'image spectrale du sujet auquel a été injecté un agent de contraste, dans lequel les données d'image spectrale du sujet ont été acquises à l'aide d'un appareil d'imagerie spectrale à rayons X (120),

une unité de décomposition de données d'image spectrale (112) configurée pour calculer une décomposition de base pour les données d'image spectrale, dans lequel la décomposition de base a pour résultat des données d'image spectrale décomposées, dans lequel les données d'image spectrale décomposées sont indicatives de poids fournis à au moins deux fonctions de base des données d'image spectrale,

une unité de génération d'image virtuelle sans contraste (113) configurée pour générer une image virtuelle sans contraste sur la base d'une combinaison prédéfinie des données d'image spectrale décomposées, et

une unité d'identification de résidu d'agent de contraste (114) configurée pour identifier une région résiduelle comprenant un résidu d'agent de contraste dans l'image virtuelle sans contraste sur la base d'une caractéristique structurelle attendue du résidu d'agent de contraste, dans lequel le résidu d'agent de contraste est une contribution de l'agent de contraste à une atténuation d'une partie du sujet représentée par des valeurs d'image de l'image virtuelle sans contraste,

dans lequel l'unité de décomposition de données d'image spectrale (112) est configurée pour :

déterminer une mesure résiduelle pour la région résiduelle, dans lequel la mesure résiduelle est indicative d'une intensité du résidu d'agent de contraste de la région résiduelle, et

calculer une nouvelle décomposition de base dans la région résiduelle en corrigeant les poids fournis aux fonctions de base des données d'image spectrale dans la région résiduelle en ajoutant ou en soustrayant une valeur de correction aux poids d'au moins une des fonctions de base, dans lequel la valeur de correction est déterminée sur la base de la mesure résiduelle, de telle sorte que le résidu d'agent de contraste soit réduit, dans lequel l'unité de décomposition de données d'image spectrale (112) est configurée pour définir une zone résiduelle contenant la région résiduelle dans l'image virtuelle sans contraste, et comprend une marge d'un ou de deux voxels entourant la région résiduelle, dans lequel la détermination de la mesure résiduelle est en outre basée sur la zone résiduelle définie.

**2.** Appareil selon la revendication 1, dans lequel l'unité de décomposition de données d'image spectrale (112) est configurée pour calculer la nouvelle décomposition de base pour déterminer, pour la zone résiduelle, un histogramme défini par des valeurs d'image de chaque région dans la zone résiduelle et pour calculer les nouvelles données d'image spectrale décomposées sur la base de l'histogramme.

**3.** Appareil selon la revendication 1, dans lequel l'unité de décomposition de données d'image spectrale (112) est configurée pour calculer la nouvelle décomposition de base pour déterminer une zone similaire dans l'image virtuelle sans contraste pour la zone résiduelle, dans lequel une zone est similaire à la zone résiduelle si des caractéristiques d'image de l'image virtuelle sans contraste dans la zone sont similaires aux caractéristiques d'image dans la zone résiduelle, et pour calculer les nouvelles données d'image spectrale décomposées sur la base d'une comparaison des valeurs d'image de la zone similaire et de la zone résiduelle.

4. Appareil selon la revendication 3, dans lequel l'unité de décomposition de données d'image spectrale (112) est configurée pour calculer la nouvelle décomposition de base pour déterminer la zone similaire en comparant les valeurs d'image de la zone résiduelle aux valeurs d'image d'une pluralité de zones candidates en appliquant une norme de distance prédéfinie et en déterminant, sur la base de la norme de distance prédéfinie, la zone candidate la plus proche en tant que zone similaire.

5. Appareil selon l'une quelconque des revendications 3 et 4, dans lequel l'unité de décomposition de données d'image spectrale (112) est configurée pour calculer la nouvelle décomposition de base pour comparer la zone similaire avec la zone résiduelle en déterminant une différence entre chaque valeur d'image avec une valeur d'image spatialement correspondante de la zone résiduelle et pour calculer les nouvelles données d'image décomposées sur la base de la différence déterminée.

6. Appareil selon l'une quelconque des revendications 4 à 5, dans lequel l'unité de décomposition de données d'image spectrale (112) est configurée pour calculer la nouvelle décomposition de base pour déterminer plus d'une zone similaire pour la zone résiduelle et pour déterminer une moyenne pondérée de toutes les zones similaires déterminées, dans lequel la zone résiduelle est comparée à la moyenne pondérée des zones similaires.

7. Appareil selon la revendication 1, dans lequel l'unité de décomposition de données d'image spectrale (112) est configurée pour calculer la nouvelle décomposition de base pour :

   définir la région résiduelle en tant que région de données manquantes, utiliser un algorithme de retouche pour estimer des informations dans la région de données manquantes, et
   calculer la mesure résiduelle sur la base des informations estimées.

8. Appareil selon l'une quelconque des revendications précédentes, dans lequel la caractéristique structurelle attendue fait référence à une forme tubulaire et dans lequel l'unité d'identification de résidu d'agent de contraste (114) est adaptée pour identifier la région résiduelle en appliquant un filtre de densité à l'image virtuelle sans contraste.

9. Appareil selon l'une quelconque des revendications précédentes, dans lequel l'unité d'identification de résidu d'agent de contraste (114) est configurée pour appliquer un algorithme de classification basé sur un apprentissage machine à l'image virtuelle sans contraste pour détecter la région résiduelle.

10. Appareil selon la revendication 9, dans lequel l'algorithme de classification basé sur un apprentissage machine fait référence à une architecture de réseau neuronal profond.

11. Appareil selon l'une quelconque des revendications précédentes, dans lequel l'agent de contraste fait référence à un agent de contraste iodé.

12. Appareil selon l'une quelconque des revendications précédentes, dans lequel les fonctions de base sont au moins indicatives d'une fonction définissant la dépendance énergétique de l'atténuation sur l'effet de diffusion Compton et d'une fonction définissant la dépendance énergétique de l'atténuation sur l'effet photoélectrique.

13. Procédé mis en oeuvre par ordinateur pour déterminer des données d'image spectrale décomposées d'un sujet, dans lequel le procédé (200) comprend :

   la fourniture (210) de données d'image spectrale du sujet auquel a été injecté un agent de contraste, dans lequel les données d'image spectrale du sujet ont été acquises à l'aide d'un appareil d'imagerie spectrale à rayons X (120),
   le calcul (220) d'une décomposition de base pour les données d'image spectrale, dans lequel la décomposition de base a pour résultat des données d'image spectrale décomposées, dans lequel les données d'image spectrale décomposées sont indicatives de poids fournis à au moins deux fonctions de base des données d'image spectrale,
   la génération (230) d'une image virtuelle sans contraste sur la base d'une combinaison prédéfinie des données d'image spectrale décomposées, et
   l'identification (240) d'une région résiduelle comprenant un résidu d'agent de contraste dans l'image virtuelle sans contraste sur la base d'une caractéristique structurelle attendue du résidu d'agent de contraste, dans lequel le résidu d'agent de contraste est une contribution de l'agent de contraste à une atténuation d'une partie d'un sujet représentée par des valeurs d'image de l'image virtuelle sans contraste,

la détermination d'une mesure résiduelle pour la région résiduelle, dans lequel la mesure résiduelle est indicative d'une intensité du résidu d'agent de contraste de la région résiduelle, et

le calcul (250) d'une nouvelle décomposition de base dans la région résiduelle en corrigeant les poids fournis aux fonctions de base des données d'image spectrale dans la région résiduelle en ajoutant ou en soustrayant une valeur de correction aux poids d'au moins une des fonctions de base, dans lequel la valeur de correction est déterminée sur la base de la mesure résiduelle, de telle sorte que le résidu d'agent de contraste soit réduit, dans lequel le procédé comprend en outre la définition d'une zone résiduelle contenant la région résiduelle dans l'image virtuelle sans contraste, et comprend une marge d'un ou de deux voxels entourant la région résiduelle, dans lequel la détermination de la mesure résiduelle est en outre basée sur la zone résiduelle définie.

14. Programme informatique pour corriger des données d'image spectrale décomposées d'un sujet, dans lequel le programme informatique comprend des moyens de code de programme pour amener un ordinateur à exécuter les étapes du procédé tel que défini dans la revendication 13 lorsque le programme informatique est exécuté par l'ordinateur.

FIG. 1

200

```
┌─────────────────────┐
│   provide spectral  │ ──── 210
│     image data      │
└─────────────────────┘
          │
          ▼
┌─────────────────────┐
│    decomposition    │ ──── 220
└─────────────────────┘
          │
          ▼
┌─────────────────────┐
│ virtual non-contrast│ ──── 230
│       image         │
└─────────────────────┘
          │
          ▼
┌─────────────────────┐
│   residual region   │ ──── 240
└─────────────────────┘
          │
          ▼
┌─────────────────────┐
│  new decomposition  │ ──── 250
└─────────────────────┘
```

260

# FIG. 2

...

**FIG. 3**

410    420

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2018114964 A1
- US 2011064292 A1

### Non-patent literature cited in the description

- **N. RASSOULI et al.** Detector-based spectral CT with a novel dual-layer technology: principles and applications. *Insights into Imaging,* 2017, vol. 8, 589-598
- **GOSHEN et al.** An iodine-calcium separation analysis and virtually non-contrasted image generation obtained with single source dual energy MDCT. *IEEE Nuclear Science Symposium Conference Record,* 2008, 3868-3870
- **A. CRIMINISI et al.** Region filling and object removal by exemplar-based image inpainting. *IEEE Trans. Image Process,* 2004
- **R. YEH et al.** Semantic Image Inpainting with Perceptual and Contextual Losses. *IEEE Conf. on Computer Vision and Pattern Recognition,* 2017
- **ALVAREZ et al.** Energy-selective reconstructions in x-ray computerized tomography. *Physics in Medicine & Biology,* 1976, vol. 21 (5
- **LONG et al.** Fully convolutional networks for semantic segmentation. *In Proceedings of the IEEE conference on computer vision and pattern recognition,* 2015, 3431-3440